# EUROPÄISCHE PATENTSCHRIFT

(11) **EP 1 296 850 B1**
(45) Veröffentlichungstag und Bekanntmachung des Hinweises auf die Patenterteilung: **01.09.2004**
(21) Anmeldenummer: 01956506.8
(22) Anmeldetag: 28.06.2001
(51) Int. Cl.: B60P 7/08

(54) **SPANNRATSCHE MIT GURTMAGAZIN UND GURTMAGAZIN**
TENSION RATCHET WITH A BELT MAGAZINE, AND BELT MAGAZINE
CLIQUET DE SERRAGE COMBINE AVEC UN CHARGEUR DE SANGLE, ET CHARGEUR DE SANGLE CORRESPONDANT

(30) Priorität: 28.06.2000 DE 20011328 U; 10.10.2000 DE 10050000
(43) Veröffentlichungstag der Anmeldung: 02.04.2003
(73) Patentinhaber: Gleinser, Gerhard, 82395 Obersöchering (DE)
(72) Erfinder: Gleinser, Gerhard, 82395 Obersöchering (DE)
(74) Vertreter: Diehl, Hermann, Dr. Dipl.-Phys.
(86) Internationale Anmeldenummer: PCT/EP2001/007369
(87) Internationale Veröffentlichungsnummer: WO 2002/000467

(56) Entgegenhaltungen:
- DE-C- 19 544 932
- US-A- 5 611 520

## Beschreibung

Die vorliegende Erfindung betrifft eine Spannratsche mit Gurtmagazin zur Aufnahme eines Zurrgurtes, gemäss den Merkmalen des Oberbegriffes von Anspruch 1, sowie ein Gurtmagazin. Eine derartige Spannratsche ist beispielsweise bekannt aus der Patentschrift DE 195 44 932 C1.

Die dort offenbark Spannratsche ermöglicht das Aufrollen des nichtaktiven Zurrgurtes in das Gurtmagazin, sowohl im Betrieb, als auch beim Aufbewahren der Spannratsche. Eine Vorrichtung ähnlicher Art beschreibt ein Gurtmagazin für Spannratschen und wurde mit der Patentschrift DE 43 91 184 T1 offenkundig.

Spannratschen mit Gurtmagazin haben gegenüber herkömmlichen Spannratschen erhebliche Vorteile. So z.B., daß der zum Verzurren z.B. eines Transportgutes benötigte Gurt lediglich aus dem Gurtmagazin herausgezogen, um das Transportgut herumgelegt, an geeigneter Stelle z.B. an einer Ladebordwand mittels Haken befestigt und sofort verzurrt werden kann. Der nicht zum Verzurren benötigte Restgurt verbleibt, geschützt im Gurtmagazin. Nach Gebrauch ist der benutzte Gurt in wenigen Sekunden in das Magazin zurückgespult wodurch die Spannratsche jederzeit für den weiteren Gebrauch betriebsbereit verfügbar ist. Neben der damit verbundenen längeren Lebensdauer des Gurtes infolge geringerer Abnutzung, der stets betriebsbereiten Verfügbarkeit und dem einfachen sowie bequemen Händling der Spannratsche, besteht insbesondere bei gewerblicher Anwendung ein entscheidender Vorteil in Form einer gravierenden Zeitersparnis, die zum Verzurren/Entzurren einer Ladung benötigt wird. Dieser Zeitvorteil wurde in Tests mit einem Faktor von bis zu 8 ermittelt und resultiert außer dem bereits vorstehend beschriebenen aus weiteren Gegebenheiten wie z.B. dem Umstand, daß ein lose aufbewahrter Gurt von 8 oder mehr Meter Länge beim Hantieren leicht in sich verknotet, bzw. sich mit weiteren Gurten oder Gegenständen verheddert. Einem erneuten Gebrauch ist daher erst einmal ein zeit- und nervenraubendes Entknoten vorangestellt. Ganz abgesehen davon beansprucht die erfindungsgemäße Spannratsche mit Gurtmagazin gegenüber einer Spannratsche mit lose aufbewahrtem Gurt einen erheblich geringeren Lagerplatz. Auch das als lästig empfundene Einfädeln des losen Endes eines Gurtes in die Lastspannrolle einer herkömmlichen Spannratsche nach dem herumlegen um ein Transportgut, sowie dem darauffolgend notwendigen hindurchziehen der gesamten Überlänge des Gurtes durch dieselbe entfällt bei einer Spannratsche mit Gurtmagazin gänzlich. Insbesondere bei Spannratschen mit mehreren um die Lastspannrolle herum verteilten Sperrschieber zur Drehmomentaufteilung oder bei Spannratschen mit schrittweise lösbarem Gesperre ist das Einfädeln des losen Gurtendes in die Lastspannrolle oft ein vermeintliches Geduldsspiel. Außerdem entfällt bei Spannratschen mit Gurtmagazin das Befestigen bzw. Verknoten des aus herkömmlichen Spannratschen lose herausragenden und beim Transport ansonsten herumflatternden Gurtendes, das vor dem Lösen und Entfernen der Spannratsche widerum einen zusätzlichen Arbeitsschritt erfordert.

Trotz mehrerer überzeugender Vorteile haben herkömmliche Spannratschen mit Gurtmagazin den entscheidenden Nachteil, daß die Bauhöhe des Gurtmagazines mit der Länge des Gurtes erheblich zunimmt. Schon eine Gurtlänge von 5 Meter übersteigt die ursprüngliche Bauhöhe der dazu benötigten Spannratsche um teilweise mehr als das doppelte. Dieser Umstand ist zumindest im Transportbereich nur schwerlich hinnehmbar, da die Spannratschen beispielsweise oft an der Außenseite von Lkw-Bordwänden Ihren Einsatz finden und hiebei längere Gurte bei gleichzeitig niedriger Bauhöhe gefordert sind.

Ausgehend von diesem Nachteil liegt der Erfindung die Aufgabe zugrunde, eine Spannratsche mit Gurtmagazin möglichst flachbauend zu gestalten.

Diese Aufgabe wird durch die Spannratsche mit dem Gurtmagazin nach dem Gegenstand des unabhängigen Anspruchs 1 gelöst. Vorteilhafte Merkmale, Ausführungsarten, Aspekte und Ergänzungen ergeben sich aus den Unteranprüchen, der Beschreibung und den Zeichnungen.

Die Erfindung schafft des weiteren ein Gurtmagazin gemäß unabhängigem Anspruch 42.

Nach einem bevorzugten Aspekt der Erfindung ist eine Spannratsche mit Gurtmagazin zum Aufwickeln eines nichtaktiven Vorrats eines Spanngurtes vorgeschlagen, bei welcher die Spannratsche eine Lastspannrolle und eine Betätigungsvorrichtung für dieselbe enthält, das Gurtmagazin eine Gurtaufwickelvorrichtung aufweist und die Gurtaufwickelvorrichtung eine Wickelachse enthält, die im wesentlichen senkrecht zur Achsrichtung der Lastspannrolle verläuft, vorzugsweise bei der zumindest einen Gurtführung, welche den Gurt von einer Ebene in eine dazu im wesentlichen senkrechte Ebene überführt. Die Wickelachse ist diejenige Richtung, um die herum der Lastgurt um das Gurtmagazin aufgewickelt wird.

Es ist zweckmäßig, wenn die Gurtaufwickelvorrichtung eine Gurtaufwickelwelle enthält, auf welcher der Gurt aufwickelbar ist, wobei zweckmäßigerweise die Gurtaufwickelwelle von einer Handkurbel betätigbar ist.

Gemäß einer vorteilhaften Ausführungsform dieser Variante ist die Lastspannrolle drehbar zwischen einem Unterarm und einem Spannhebel gelagert.

Bevorzugt sind dabei zumindest an einer, vorzugsweise an beiden Außenseiten des Unterarms und des Spannhebels Sperrräder vorgesehen, die kraftschlüssig mit der Lastspannrolle in Verbindung stehen, wobei zumindest ein Sperrschieber im Unterarm und/oder im Spannhebel vorgesehen ist, welcher mit den Sperrrädem derart in Wirkverbindung bringbar ist, daß ein Sperrschieber beim Auf- und Zu-Bewegen des Spannhebels dem Forttrieb der Lastspannrolle und damit dem Aufwickeln bzw. Spannen des Gurtes dient und der andere ein Rückdrehen der Lastspannrolle verhindert.

Es ist besonders günstig, wenn das Gurtmagazin in Bezug auf die Spannratsche flachliegend, (d.h. aus der Vertikale in die Horizontale verdreht) angeordnet ist, wobei der Gurt in horizontaler Rotation auf eine vertikal im Gurtmagazin angeordnete Gurtaufwickelwelle aufrollbar ist.

Vorteilhafterweise ist der zumindest eine Sperrschieber in Führungsschlitzen verschiebbar, die in den Seitenwänden von dem Unterarm und Spannhebel vorgesehen sind, wobei vorzugsweise der zumindest eine Sperrschieber federnd gegen das zumindest eine Sperrrad gedrückt ist.

Nach einem bevorzugten Aspekt der Erfindung ist vorgeschlagen, das Gurtmagazin gegenüber der Spannratsche mit translatorischer Gurtführung, um eine Rotation von 90° versetzt flachliegend anzuordnen. Mit anderen Worten wird das Gurtmagazin anstelle der bisher bekannten vertikalen Ausrichtung in Bezug auf die Spannratsche und damit rein translatorischer Gurtführung in nunmehr horizontaler Ausrichtung mit einer translatorisch und um 90° rotorisch verlaufenden Gurtführung angeordnet. Hiebei wird der im Gurtmagazin befestigte und mit horizontaler Rotation in das Gurtmagazin aufzuwickelnde Gurt ausgehend von der Gurtaufwickelwelle im Gurtmagazin zwischen zwei im Bereich des Überganges zwischen dem Gurtmagazin und der Spannratsche vertikal angeordneten Gurtführungen hindurchgeführt, diese translatorisch verlassend mit einer Rotation von 90° durch die Lastspannrolle hindurch aus der Spannratsche herausgeführt.

Um eine möglichst reibungsarme bzw. leichtgängige Gurtführung zu ermöglichen ist vorzugsweise der Abstand der beiden Gurtführungen bezogen auf die Lastspannrolle der Spann- ratsche in Abhängigkeit der Gurtbreite, der Gurtstärke und der Materialkonsistenz entsprechend gewählt. Zweckmäßigerweise ist ein vorzugsweise mit Federkraft beaufschlagter Sperrschieber im Unterarm der Spannratsche, dessen Aufgabe es ist, ein Rückdrehen der Lastspannrolle zu verhindert, in einem radialen Winkel zur Lastspannrolle angeordnet. Mit Vorteil ist dieser Winkel gleich oder größer dem Winkel der rotierten Gurtführung zwischen der Lastspannrolle und den Gurtführungen. Dieser Winkel entspricht günstigerweise je nach Art des Gurtes zwischen der Lastspannrolle und den Gurtführungen in etwa einem Wert von 15°. Zusätzlich kann zur Verkürzung des Sperrschiebers die Federbeaufschlagung welche sich bei gattungsgemäßen Spannratschen mittels einer Spiralfeder in Verlängerung dessen befindet und damit die Wegstrecke der rotierten Gurtführung unter Umständen maßgeblich beeinflusst, unterhalb des Sperrschiebers ggf. mit einer Ringfeder erfolgen, so daß je nach Art des zu verwendenden Gurtmaterials eine Verkürzung der gesamten Spannratsche ermöglicht wird.

Die einer Spannratsche ohne Gurtmagazin zugrundeliegende Bauhöhe ist beeinflußt von deren technischen Aufbau sowie der angedachten Belastung. Mit zunehmender Leistung der Spannratschen sind außer einer massiveren Bauweise natürlich auch entsprechende Gurte größerer Breite und Stärke erforderlich. Die mittlere Bauhöhe einer Spannratsche entspricht daher in etwa der Breite der benötigten Gurte.

Ausgehend dieser Bauhöhen liegt der Erfindung der Gedanke zugrunde, Spannratschen mit einem Gurtmagazin zu ergänzen wobei unter Berücksichtigung der jeweiligen Lastauslegung die ursprüngliche Bauhöhe der Spannratsche entweder überhaupt nicht, oder nur unwesentlich überschritten wird und daher einen entschei- denden Vorteil gegenüber bisher bekannten Spannratschen mit Gurtmagazin darstellt.

Vorzugsweise ist in Abhängigkeit der Lastauslegung einer Spannratsche auch die Länge des Spannhebels bemessen, um das erforderliche Drehmoment in die Spannratsche einzubringen. Hingegen kann der Unterarm einer Spannratsche, da er im Zurrstrang liegt, relativ kurz gehalten werden. Auch dieser Umstand kann erfindungsgemäß genutzt werden, indem das Gurtmagazin in unmittelbarer Anbindung an den Unterarm der Spannratsche anschließt. Der Spannhebel kann im geschlossenen Zustand der Spannratsche in erheblicher Länge über dem Gurtmagazin zu liegen kommen, so daß eine kompakte Bauweise entsteht.

Vorteilhaft hierbei ist einerseits die hohe Kapazität des Gurtmagazines wobei Gurtlängen von 8 bzw. 10 Meter und mehr, problemlos aufgenommen werden können und andererseits die Länge dieser kombinierten Vorrichtung weder störende noch unhandliche Ausmaße annehmen würde. Eine Spannratsche mit Gurtmagazin entsprechend der erfindungsgemäßen Bauart fügt sich trotz hoher Gurtaufnahmekapazität harmonisch in den Zurrstrang ein.

Anspruch 10 bis 12 betreffen eine inmitten des Gurtmagazines das Boden- sowie Oberteil des Gurtmagazines durchgeführte und drehbar gelagerte Gurtaufwickelwelle mit einer an dessen Oberseite befestigten Drehkurbel zum Aufwickeln des Gurtes in das Gurtmagazin. Anstelle der Drehkurbel kann auch ein Federmittel den Gurteinzug in das Gurtmagazin bewirken.

Nach Anspruch 13 bis 15 sind im Grenzbereich zwischen dem Gurtmagazin und dem Unterarm der Spannratsche zwei das Boden- und Oberteil des Gurtmagazines formstabil verbindende Bolzen mit darüberliegenden drehbar gelagerten Hülsen zur Gurtführung angeordnet. Ersatzweise können die Gurtführungen auch aus verlängerten und nach innen geformten Seitenteilen des Unterarmes der Spannratsche oder aus beigebogenen Seitenlaschen des Boden- und oder Oberteils des Gurtmagazines bestehen, welche gleichzeitig zur Befestigung des Gurtmagazines am Unterarm der Spannratsche dienen.

Anspruch 16 verdeutlicht den Gurtverlauf zwischen der vorgenannten Gurtführung und der Lastspannrolle der Spannratsche. wobei der Gurt zwischen den beiden Gurtführungen hindurch, diese verlassend um 90° in seiner translatorischen Laufbahn rotiert, in die Lastspannrolle der Spannratsche einmündet, sodass der Gurt nach Austritt derselben in auflagekonformer Lage zum Transportgut zur Verfügung steht.

Entsprechend der translatorisch sowie rotorisch verlaufenden Gurtführung im Bereich zwischen der Gurtführung und der Lastspannrolle wird ein reibungsarmer Gurttransportnur ermöglicht wenn gemäß Anspruch 17 vorzugsweise der Sperrschieber im Unterarm der Spannratsche in einem radialen Winkel zur Lastspannrolle angeordnet ist, der mindestens dem Winkel des vorbeigleitenden Gurtes entspricht. Weiter vorteilhaft ist nach Anspruch 18 und 19 die Federbeaufschlagung des Sperrschiebers in Richtung Sperrrad anstelle einer in Verlängerung des Sperrschiebers aufgesetzten Spiralfeder, diese an der Unterseite zum Unterarm der Spannratsche hingewanten Seite anzuordnen und die Spiralfeder teils aus Platzgründen, teils aus montagetechnischen Gründen zwischen dem Sperrschieber und der Bodenwandung des Unterarmes gegen eine Ringfeder, gelagert in einem der beiden Seitenteile des Unterarmes, auszutauschen. Ein derart verkürzter Sperrschieber gestattet unter Berücksichtigung der minimalsten rotorisch notwendigen Wegstrecke der Gurtführung eine Verkürzung des Abstandes zwischen der Gurtführung und der Lastspannrolle, woraus eine Verkürzung der gesamten Vorrichtung aus Spannratsche und Gurtmagazin resultiert.

Damit das Gesperre in der Spannratsche maximalen Kräften standhält, ist es gemäß Anspruch 20 günstig, wenn die Sperrschieber im Unterarm und im Spannhebel möglichst radial und formkonform in die Sperrräder eingreifen.

Zur Befestigung der Spannratsche z. B. an einer Ladebordwand ist zweckmäßig ein zweites in der Regel kurzes Stück Gurt vorgesehen, welches an einem Ende ein Verbindungsmitttel z.B. Haken aufweist und das andere Ende gemäß Anspruch 21 an der Traverse am Ende des Gurtmagazines befestigt ist. Nach der Variante von Anspruch 22 ist der Gurt mittels einer Art Kettenglied an der Traverse des Gurtmagazines befestigt, wobei das Kettenglied mittels einer aus der Traverse des Gurtmagazines ausgepresster Lasche verschiebesicher verankert ist.

Die Ansprüche 23 bis 26 betreffen eine andere bevorzugte Möglichkeit zur Aufnahme eines zweiten Gurtes wobei ein im wesentlichen U-förmiger Bügel an seinen beiden Gabelenden kurze in einem Winkel von etwas mehr als 90° eingebogene Enden besitzt, die durch Bohrungen in den Seitenwänden des Unterarmes geführt sind und auf der Innenseite des Unterarmes mittels Sicherungselementen wie z. B. Schraubmuttem, Splinte, oder Stauchpressung gegen herausgleiten gesichert sind. Da der Gurt im Eintrittsbereich der Bügelenden in nahezu vertikaler Lage inmitten der Spannratsche vorbei gleitet, ist zweckmäßigerweise darauf zu achten, daß die Bügelenden nicht zu weit in das innere des Unterarmes hineinragen. Mit Vorteil ist im weiteren Verlauf der Bügel kurz nach dem Austritt aus den Seitenwänden des Unterarmes in einem leichten Winkel so geformt, daß der Bügel einerseits am Untergehäuse der Spannratsche anliegt, andererseits jedoch nicht mit dem auf dem Gurtmagazin aufgerollten Gurt kollidiert. In einer anderen zweckmäßigen Bauart ragt der Bügel bis hinter das Ende des Gurtmagazines hinaus, wodurch die Bauhöhe der Spannratsche weiter minimiert werden kann. Der Bügel schwenkbar gelagert im Unterarm der Spannratsche vereint zwei Vorteile miteinander Einerseits wird das Gurtmagazin nicht in den Zurrstrang eingebunden, sodass die Materialverwindung bei Belastung minimiert wird und gleichzeitig eine bessere Anpassung der Vorrichtung an die Unterlage erfolgt. Zum anderen kann der Bügel nach unten geschwenkt werden, wodurch die Spannratsche pistolenartig in der Hand liegt und dabei der Gurt leicht aus dem Magazin gezogen bzw. aufgerollt werden kann.

Nach Anspruch 27 ist vorgeschlagen den Unterarm der Spannratsche einstückig mit dem Gurtmagazin zu formen. Dabei kann zweckmäßigerweise das beigebogene Oberteil des Gurtmagazines anstelle mit Nieten, durch Schrauben, durch Verschweißen oder ein weiteres nicht näher beschriebenes Befestigungsmittel befestigt werden. Diese Ausführungsart minimiert die Montagekosten, ist Materialsparend und gewährleistet eine robuste und formstabile Kombination ohne zusätzliche Verbindungselemente.

Um handelsübliche Spannratschen mit einem Gurtmagazin nachrüsten zu können, ist gemäß einer weiteren bevorzugten Ausgestaltung der Erfindung gemäß Anspruch 28 ein Gurtmagazin mit herstellungskonformen Verbindungselementen versehen. Anspruch 29 sieht ein Gurtmagazin als Wechselchassis vor, wobei eine Spannratsche beispielsweise mit verschieden Gurtlängen je nach momentanem Bedarf bestückbar ist.

Bei Spannratschen und insbesondere bei Schwerlastratschen ist es zuweilen schwierig den Gurt aus der Lastspannrolle nach dem Entspannen zu entfernen, wenn das Transportgut spannungslos keine Zugkraft mehr auf die Spannratsche ausübt, aber auf der Lastspannrolle noch einige Wicklungen Gurt lagern und die Lastspannrolle schwergängig ist oder verklemmt. Ein Rückdrehen der Lastspannrolle ist oftmals nur möglich durch ein kräftiges Ziehen am Gurt das nicht immer ohne Zuhilfenahme geeigneter Werkzeuge gelingt. Hierzu ist bevorzugt nach Anspruch 30 vorgesehen an der Lastspannrolle der Spannratsche an mindestens einer Außenseite eine Drehspange anzubringen. Diese ermöglicht ein manuelles Rückdrehen der Lastspannrolle in Lösestellung der Spannratsche bei Außereingriffstellung der Sperrschieber mit den Sperrräder.

Um ein Abwickeln des Gurtes vom Gurtmagazin bzw. das austreten einer Gurtschleife aus dem Gurtmagazin insbesondere während einem Transport zu verhindern, ist nach den in Anspruch 31 bis 35 beschriebenen zweckmäßigen Ausführungsformen der Erfindung vorgesehen, daß der Spannhebel der Spannratsche in geschlossenem Zustand in den Rotationsbereich der Drehkurbel der Gurtaufwickelwelle hineinragt und dadurch ein Rückdrehen der Kurbel über diesen Bereich verhindert. Ersatzweise ist im Spannhebel eine Aussparung vorgesehen wobei der Spannhebel die Kurbel umfaßt. Um ein weiterdrehen der Drehkurbel bis zu dieser Position auch dann zu ermöglichen wenn der Gurt bereits straff im Gurtmagazin aufgerollt ist, wird vorgeschlagen die Drehkurbel mit der Gurtaufwickelwelle im Gurtmagazin über eine Rutschkupplung, ein Federwerk oder dergleichen zu verbinden. Eine andere Ausführungsart schlägt vor, die Drehkurbel bzw. deren Handgriff umlegbar, versenkbar oder abnehmbar zu gestalten, wobei die Gurtaufwickelwelle hierdurch gegen Rückdrehen arretierbar ist. Außerdem ist eine Vorkehrung angedacht die ein übermäßig leichtgängiges abrollen des Gurtes aus dem Gurtmagazin verhindert, da bei ruckartigem herausziehen des Gurtes aus der Spannratsche der Gurt im Gurtmagazin überdrehen und dadurch verklemmen kann. Um ein Überdrehen des Gurtes vorstehender Art zu vermeiden ist eine Gurtbremse vorgesehen derart, daß eine Art Beilageblatt im Gurtmagazin, oder eine Federscheibe zwischen der Kurbel und dem Gurtmagazingehäuse angeordnet eine ausreichende Schleif- und damit Bremswirkung erzeugt.

Die Ansprüche 37 bis 39 zeigen Varianten der Erfindung, bei denen der Gurt fest mit der Gurtaufwickelwelle im Gurtmagazin verbunden ist. Ein Gurtstopper in Form einer Klammer oder dergleichen ist dabei auf dem Gurt befestigt und befindet sich in einem Abstand zu der Gurtaufwickelwelle der so bemessen ist, daß bei restloser Inanspruchnahme des Gurtvorrates infolge der zweiseitig einziehenden Lastspannrolle in der Spannratsche genügend Restgurt zum Verspannen des Transportgutes vorrätig ist. Dabei ist zu berücksichtigen, daß der Gurtstopper einen größeren Durchmesser aufweist als der Durchgangsschlitz in der Lastspannrolle, damit der Gurt nur bis zum Gurtstopper aus der Lastspannrolle der Spannratsche gezogen werden kann. Grund dessen sind auch die beiden Gurtführungen nach Anspruch 13 in einem Abstand zueinander so zu bemessen, daß der Gurtstopper diese ungehindert passieren kann.

Nach Anspruch 40 läßt sich zweckmäßigerweise erreichen, daß die Spannratsche mit Gurtmagazin im rauen Einsatz auch bei extrem hohen Vibrationen nicht selbsttätig lösen kann. Hierzu befinden sich im Unterarm der Spannratsche beidseitig oberhalb der Lageraugen der Lastspannrolle und im radialen Schwenkbereich des Sperrschiebers im Spannhebel angeordnete Arretierungsfahnen. Diese sind so angeordnet daß der Spannhebel mit manuell zurückgezogenem Sperrschieber über diese Arretierungen hinweg in seine Ruhestellung bewegt werden kann, wobei der Sperrschieber losgelassen hinter dieser Arretierung in die Sperrräder eingreift und gleichzeitig die Seitenlaschen des Spannhebels den im Unterarm und ebenfalls im Eingriff mit den Sperrrädern stehenden Sperrschieber hintergreifen, so daß die Spannratsche vollständig in sich verriegelt ist.

Um Spannratschen mit Gurtmagazin einem möglichst breiten Anwenderkreis zugänglich zu machen, ist es günstig, Spannratschen mit Gurtmagazin nach Anspruch 41 den verschiedenartigen Anforderungen entsprechend zu gestalten. So können z. B. verschiedenartige Gesperre mit oder ohne schrittweiser Rückdrehung der Lastspannrolle, mehrere Sperrschieber zur Verteilung des Drehmomentes auf der Lastspannrolle, oder branchenspezifische Anbauten an der Spannratsche wie z.B. eine Bodenplatte mit ausgepresstem feststehendem Haken vorgesehen sein. Ebenso können Vorrichtungen vorgesehen sein, die ein internes oder externes Schloß zum Verschließen der Einheit, wie etwa Diebstahl oder ähnliches, bereitstellen.

Anhand der in den folgenden Zeichnungen dargestellten Ausführungsbeispiele ist der Gegenstand der Erfindung näher erläutert. Es zeigen
- Fig. 1: eine perspektivische Ansicht einer erfindungsgemäßen Spannratsche mit Gurtmagazin,
- Fig. 2: eine transparente Draufsicht auf eine Spannratsche mit Gurtmagazin,
- Fig. 3: eine perspektivische Ansicht eines Gurtmagazines zur Befestigung an handelsübliche Spannratschen und
- Fig. 4: eine Teilansicht einer Variante des Gurtmagazines, bei welcher der zweite Gurt an dessen Gehäuseende befestigt ist.

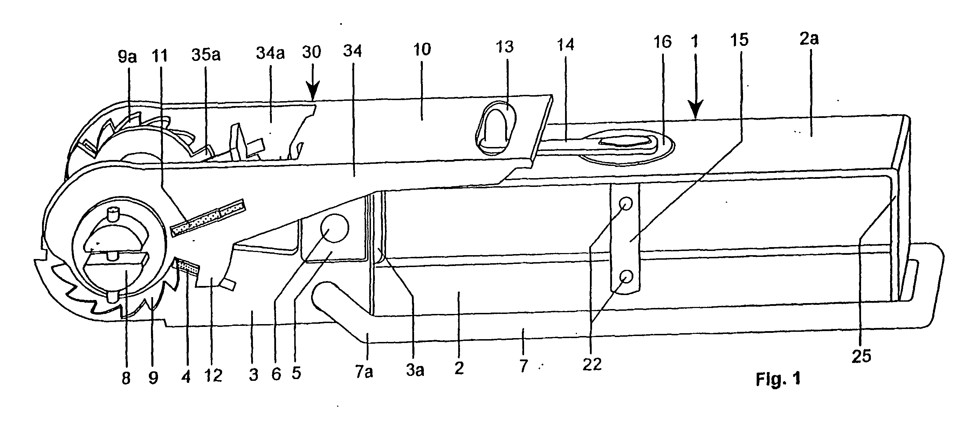

Die in Fig. 1 dargestellte Spannratsche 30 mit Gurtmagazin 1 ein den Unterarm der Spannratsche und das Gurtmagazin bildendes Bodenteil 2 mit Seitenwänden 3, 3a, einen darin in Führungsschlitzen verschiebbar gelagerten mittels einer Feder in Richtung Sperrad 9, 9a druckbeaufschlagten Sperrschieber 4, ein parallel zum Bodenteil 2 verlaufendes Oberteil 2a, das vorzugsweise aus der Verlängerung des Bodenteils 2 über eine Traverse 25 in U-Form beigebogen ist, Befestigungs- flanschen 5, 5a, die Bohrungen 6, 6a zur Aufnahme von Befestigungsmittel wie z.B.

Nieten aufweisen und das Oberteil 2a mit den Seitenwänden 3, 3a formstabil verbindet.

Die Spannratsche 30 mit Gurtmagazin enthält ferner einen Bügel 7 der in Bohrungen der Seitenwände 3, 3a schwenkbar lagert und Biegungen 7a, 7b aufweist, eine Lastspannrolle 8 drehbar gelagert in den Seitenwänden 3, 3a sowie 34, 34a und kraftschlüssig verbunden mit den Sperrräder 9, 9a, einen Spannhebel 10 mit einem in dessen Seitenwänden 34, 34a und in Führungsschlitzen verschiebbar gelagerten Sperrschieber 11, der mittels einer Feder druckbeaufschlagt in die Sperrräder 9, 9a eingreift und zum Antrieb der Lastspannrolle 8 dient.

Des weiteren enthält die Spannratsche 30 mit Gurtmagazin je eine an den Seitenwänden 34, 34a vorhandene Seitenlasche 12, 12a zum Hintergreifen des Sperrschiebers 4, wenn dieser sich in Eingriffstellung mit den Sperrräder 9, 9a befindet, eine in der Querverbindung des Spannhebels 10 befindlichen Aussparung 13 zur Arretierung der Drehkurbel 14, die drehfest mit der Federscheibe 16 und einer Gurtaufwickelwelle 15 in Verbindung steht. Die Gurtaufwickelrolle 15 enthält vorzugsweise Bohrungen 22 zur Befestigung eines Gurtes. Die Federscheibe 16 schleift beim Drehen der Drehkurbel 14 auf dem Oberteil 2a und beaufschlagt die Gurtaufwickelwelle 15 mit einer Bremswirkung.

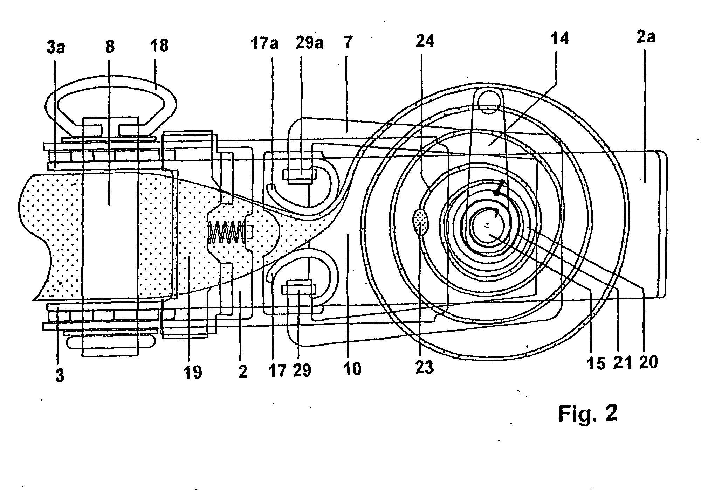

Fig. 2 zeigt in "transparenter" Draufsicht auf eine Spannratsche mit Gurtmagazin die Lage und Führung des Gurtes, sowie weitere in der Beschreibung dargelegte Details. Die Gurtführungen 17, 17a können aus verlängerten und nach innen geformten bzw. eingerollten Bereichen der Seitenwänden des Bodenteiles 2 gebildet sein. An einer Außenseite der Lastspannrolle 8 ist eine Drehspange 18 angeordnet mit deren Hilfe die Lastspannrolle 8 in Lösestellung des Spannhebels 10 manuell zurückdrehbar ist. Der Gurt 19 ist von Außen durch einen Schlitz in der Lastspannrolle 8 in die Spannratsche eingeführt, um 90° aus seiner Mittelebene rotiert, gleitet vorbei am Sperrschieber 4 zwischen den beiden Gurtführungen 17, 17a hindurch in das Gurtmagazin 1 und ist dort mit einer Klammer 23 versehen mit einem Gurtteilstück 24 verbunden, das auf einer Hohlwelle 20 befestigt ist. Diese ist über eine Feder 21 mit der Gurtaufwickelwelle 15 verbunden, welche durch das Oberteil 2a hindurchgeführt drehbar gelagert und mit der Drehkurbel 14 verbunden ist. Die Drehkurbel 14 kann auch bei stramm aufgerolltem Gurt mittels der Feder 21 bis über den Eingriffsbereich des Spannhebels 10 bzw. bis deren Aussparung 13 bewegt und durch diese(n) gegen Rückdrehung arretiert werden.

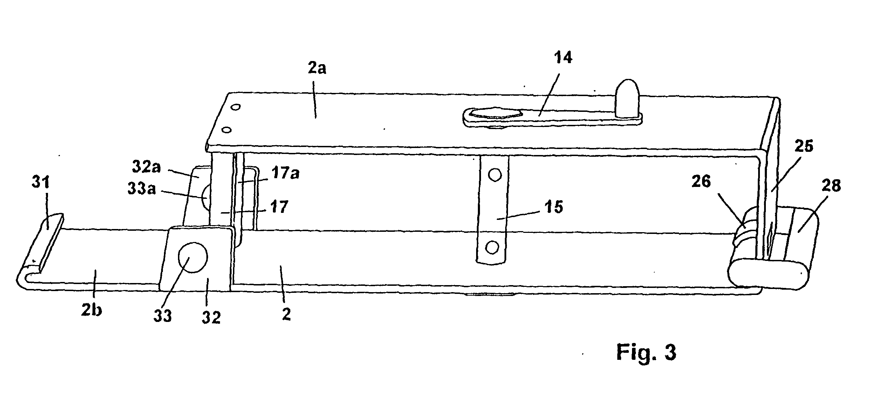

Das in Fig. 3 dargestellte Single-Gurtmagazin dient zum Nachrüsten einer handelsüblichen Spannratsche ohne Gurtmagazin. Es weist bauartkonforme Befestigungsteile auf, wie z.B. ein um einen Bereich 2b verlängertes Bodenteil 2 mit beigeklappter Hakenlasche 31 sowie Seitenlaschen 32, 32a, die mit Bohrungen 33, 33a versehen sind. Die Gurtführungen 17, 17a sind aus vorzugsweise massiven Bolzen gefertigt, die das Bodenteil 2 formstabil mit dem Oberteil 2a verbinden. Zur Befestigung eines zweiten Gurtes 27 ist ein Befestigungsteil 28 vorgesehen, das von einer Lasche 26 fixiert von der Traverse 25 gehalten wird.

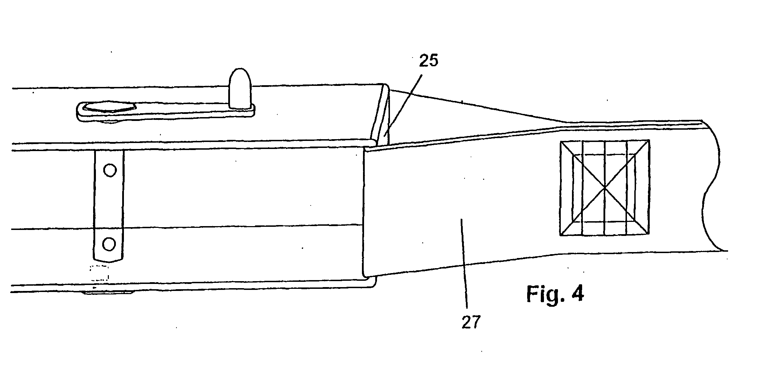

Fig. 4 zeigt eine Teilansicht eines Gurtmagazines ähnlich zu dem von Fig. 3, bei welchem der zweite Gurt 27 um die Traverse 25 des Gurtmagazines befestigt ist.

Wie aus den Fig. 1 und 2 ersichtlich ist, läßt sich die Bauhöhe der Spannratsche erfindungsgemäß dadurch verringern, daß die Achsrichtung, d.h. Wickelachse, im dargestellten Beispiel die Drehachse, der Gurtaufwickelrolle 15 im wesentlichen senkrecht zur Achsrichtung der Lastspannrolle 8 verläuft und das von den zur/oder von der Gurtaufwickelrolle 15 führende Gurttrum zwischen Lastspannrolle 8 und Gurtaufwickelrolle 15 eine Gurtführung 17 durchläuft, das eine Drehung des Gurtes 19 um 90° bewirkt.

Nach einem bevorzugten Aspekt der Erfindung ist eine Spannratsche mit Gurtmagazin vorgesehen, im wesentlichen bestehend aus einer Lastspannrolle, welche drehbar zwischen einem Unterarm und einem Spannhebel gelagert ist und deren beiden Außenseiten Sperrräder aufweisen, die kraftschlüssig mit der Lastspannrolle in Verbindung stehen, mindestens je einem Sperrschieber im Unterarm und im Spannhebel, welche mittels Feder druckbeaufschlagt verschiebbar in Führungsschlitzen in den Seitenwänden angeordnet in die Sperrräder eingreifen, wobei ein Sperrschieber beim Auf- und Zu-Bewegen des Spannhebels dem Forttrieb der Lastspannrolle und damit dem Aufwickeln bzw. Spannen des Gurtes dient und der andere ein Rückdrehen der Lastspannrolle verhindert, sowie einem Gurtmagazin mit einer in deren Seitenteilen drehbar gelagerten und mit einer Handkurbel versehenen Welle zum Aufwickeln des nichtaktiven Gurtvorrats, wobei Gurtmagazin 1 in Bezug auf die Spannratsche 30 flachliegend, (d.h. aus der Vertikale in die Horizontale verdreht) angeordnet ist, wobei der Gurt in horizontaler Rotation auf eine vertikal im Gurtmagazin angeordnete Gurtaufwickelwelle 15 aufrollbar ist.

### Bezugszeichenliste

- 1: Gurtmagazin
- 2: Bodenteil
- 2a: Oberteil
- 3: Seitenwand Unterarm
- 3a: Seitenwand Unterarm
- 4: Sperrschieber Unterarm
- 5: Seitenlasche Oberteil
- 5a: Seitenlasche Oberteil
- 6: Bohrung Seitenlasche
- 7: Bügel
- 7a: Biegung Bügel
- 8: Lastspannrolle
- 9: Sperrrad
- 10: Spannhebel
- 11: Sperrschieber Spannhebel
- 12: Flanke Seitenwand Spannhebel
- 13: Aussparung Spannhebel
- 14: Drehkurbel
- 15: Gurtaufwickelwelle
- 16: Federring
- 17: Gurtführung
- 18: Drehspange
- 19: Gurt
- 20: Hohlwelle
- 21: Feder
- 22: Bohrungen Gurtaufwickelwelle
- 23: Gurtstopper
- 24: Gurtteilstück
- 25: Traverse
- 26: Arretierung Befestigungsteil
- 27: Zweiter Gurt
- 28: Befestigungsteil
- 29: Sicherungsmittel Bügel
- 30: Spannratsche
- 31: Hakenlasche
- 32: Seitenlasche Bodenteil
- 33: Bohrungen Seitenlasche Bodenteil
- 34: Seitenteil Spannhebel
- 35: Arretierungsfahnen Unterarm

## Patentansprüche

1. Spannratsche (30) mit Gurtmagazin (1) zum Aufwickeln eines nichtaktiven Vorrats eines Spanngurtes (19), wobei die Spannratsche (30) eine Lastspannrolle (8) und eine Betätigungsvorrichtung für dieselbe enthält und das Gurtmagazin (1) eine Gurtaufwickelvorrichtung (14, 15) aufweist, **dadurch gekennzeichnet, daß** die Gurtaufwickelvorrichtung (14, 15) eine Wickelachse enthält, die im wesentlichen senkrecht zur Achsrichtung der Lastspannrolle (8) verläuft.

2. Spannratsche mit Gurtmagazin nach Anspruch 1, **gekennzeichnet durch** zumindest eine Gurtführung (17, 17a), welche den Gurt (19) von einer Ebene in eine dazu im wesentlichen senkrechte Ebene überführt.

3. Spannratsche mit Gurtmagazin nach einem der vorstehenden Ansprüche, **dadurch gekennzeichnet, daß** die Gurtaufwickelvorrichtung eine Gurtaufwickelwelle (15) enthält, auf welcher der Gurt (19) aufwickelbar ist.

4. Spannratsche mit Gurtmagazin nach einem der vorstehenden Ansprüche, **dadurch gekennzeichnet, daß** die Gurtaufwickelwelle (15) von einer Handkurbel betätigbar ist.

5. Spannratsche mit Gurtmagazin nach einem der vorstehenden Ansprüche, **dadurch gekennzeichnet, daß** die Lastspannrolle (8) drehbar zwischen einem Unterarm (3, 3a) und einem Spannhebel (10) gelagert ist.

6. Spannratsche mit Gurtmagazin nach Anspruch 5, **dadurch gekennzeichnet, daß** zumindest an einer vorzugsweise an beiden Außenseiten des Unterarms (3, 3a) und des Spannhebels (10) Sperrräder (9, 9a) vorgesehen sind, die kraftschlüssig mit der Lastspannrolle (8) in Verbindung stehen, wobei zumindest ein Sperrschieber im Unterarm (3, 3a) und/oder im Spannhebel (10) vorgesehen ist, welcher mit den Sperrrädern (9, 9a) derart in Wirkverbindung bringbar ist, daß ein Sperrschieber (4, 11) beim Auf- und Zu-Bewegen des Spannhebels dem Forttrieb der Lastspannrolle und damit dem Aufwickeln bzw. Spannen des Gurtes dient und der andere ein Rückdrehen der Lastspannrolle verhindert.

7. Spannratsche mit Gurtmagazin nach einem der vorstehenden Ansprüche, **dadurch gekennzeichnet, daß** das Gurtmagazin (1) in Bezug auf die Spannratsche (30) flachliegend, (d.h. aus der Vertikale in die Horizontale verdreht) angeordnet ist, wobei der Gurt in horizontaler Rotation auf eine vertikal im Gurtmagazin angeordnete Gurtaufwickelwelle (15) aufrollbar ist.

8. Spannratsche mit Gurtmagazin nach Anspruch 6, **dadurch gekennzeichnet, daß** der zumindest eine Sperrschieber (4, 11) in Führungsschlitzen verschiebbar ist, die in den Seitenwänden von dem Unterarm (3, 3a) und Spannhebel (10) vorgesehen sind.

9. Spannratsche mit Gurtmagazin nach Anspruch 8, **dadurch gekennzeichnet, daß** der zumindest eine Sperrschieber (4, 11) federnd gegen das zumindest eine Sperrrad (9, 9a) gedrückt ist.

10. Spannratsche mit Gurtmagazin nach einem der vorstehenden Ansprüche, **dadurch gekennzeichnet, daß** die Gurtaufwickelwelle (15) inmitten des Gurtmagazines (1) in Gehäuseteilen (2, 2a) drehbar gelagert und mit einer Drehkurbel (14) versehen ist.

11. Spannratsche mit Gurtmagazin nach einem der vorstehenden Ansprüche, **dadurch gekennzeichnet, daß** die Gurtaufwickelwelle (15) durch ein federbetätigtes Antriebsmittel rotiert wird.

12. Spannratsche mit Gurtmagazin nach einem oder mehreren der vorhergehenden Ansprüche, **dadurch gekennzeichnet, daß** die Gurtaufwickelwelle (15) Befestigungsmittel wie z.B. Bohrungen (22), oder einen Durchgangsschlitz zur Befestigung des Gurtes (19) bzw. (24) aufweist.

13. Spannratsche mit Gurtmagazin nach einem oder mehreren der vorhergehenden Ansprüche, **gekennzeichnet durch** zwei in einem Abstand zueinander stehenden, Gurtführungen (17, 17a)

14. Spannratsche mit Gurtmagazin nach einem oder mehreren der Ansprüche 2 bis 13, **dadurch gekennzeichnet, daß** die Gurtführungen (17, 17a) z. B. aus den Seitenteilen (3, 3a) des Unterarmes, oder aus den Seitenlaschen (5, 5a) der Gehäuseteile (2, 2a), oder aus zwei die Gehäuseteile (2, 2a) formstabil verbindenden Bolzen bestehen.

15. Spannratsche mit Gurtmagazin nach einem oder mehreren der vorhergehenden Ansprüche, **dadurch gekennzeichnet, daß** die Gurtführungen (17, 17a) drehbar gelagerte Hülsen, Gleitrollen oder ähnliches aufweisen.

16. Spannratsche mit Gurtmagazin nach einem oder mehreren der vorhergehenden Ansprüche, **dadurch gekennzeichnet, daß** der Gurt (19, 24) zwischen den Gurtführungen (17, 17a) und der Lastspannrolle (8) um eine Rotation von 90° gedreht wird.

17. Spannratsche mit Gurtmagazin nach einem oder mehreren der vorhergehenden Ansprüche, **dadurch gekennzeichnet, daß** der Sperrschieber (4) in einem radialen Winkel zur Lastspannrolle (8) steht, der dem Winkel des rotierten Gurtverlaufes zwischen der Lastspannrolle (8) und den Gurtführungen (17, 17a) entspricht oder größer als dieser ist.

18. Spannratsche mit Gurtmagazin nach einem oder mehreren der vorhergehenden Ansprüche, **dadurch gekennzeichnet, daß** der Sperrschieber (4) an seiner zum Bodenteil (2) hingewandten Unterseite in Richtung zum Sperrrad (9, 9a) federbeaufschlagt ist.

19. Spannratsche mit Gurtmagazin nach Anspruch 18, **dadurch gekennzeichnet, daß** die Federbeaufschlagung mittels einer im Seitenteil (3) bzw. (3a) gelagerten Ringfeder erfolgt.

20. Spannratsche mit Gurtmagazin nach einem oder mehreren der vorhergehenden Ansprüche, **dadurch gekennzeichnet, daß** die Sperrschieber (4, 11) in die Sperrräder (9, 9a) radial und formkonform eingreifen.

21. Spannratsche mit Gurtmagazin nach einem oder mehreren der vorhergehenden Ansprüche, **dadurch gekennzeichnet, daß** ein zweiter Gurt (27) an der Traverse (25) befestigt ist und das andere Ende des Gurtes ein Verbindungsmitttel z. B. einen Haken aufweist.

22. Spannratsche mit Gurtmagazin nach einem oder mehreren der vorhergehenden Ansprüche, **dadurch gekennzeichnet, daß** an der Traverse (25) ein Befestigungteil (28) mit einer Arretierung (26) zur Befestigung eines zweiten Gurtes (27) angebracht ist.

23. Spannratsche mit Gurtmagazin nach einem oder mehreren der vorhergehenden Ansprüche, **gekennzeichnet durch** einen Bügel (7) schwenkbar gelagert in den Seitenwänden 3, 3a zur Befestigung eines zweiten Gurtes (27).

24. Spannratsche mit Gurtmagazin nach Anspruch 23, **dadurch gekennzeichnet, daß** der Bügel (7) bis über die Traverse (25) hinausragt.

25. Spannratsche mit Gurtmagazin nach einem oder mehreren der vorhergehenden Ansprüche, **dadurch gekennzeichnet, daß** der Bügel (7) im wesentlichen U-förmig ist und Biegungen (7a, 7b) aufweist.

26. Spannratsche mit Gurtmagazin nach einem oder mehreren der vorhergehenden Ansprüche, **dadurch gekennzeichnet, daß** der Bügel (7) an seinen beiden durch die Seitenwände (3, 3a) in das innere des Unterarmes ragenden Enden Sicherungsmittel (29, 29a) gegen herausgleiten aufweist.

27. Spannratsche mit Gurtmagazin nach einem oder mehreren der vorhergehenden Ansprüche, **dadurch gekennzeichnet, daß** der Unterarm der Spannratsche (30) einstückig mit dem Gurtmagazin (1) gebildet ist.

28. Spannratsche mit Gurtmagazin nach einem oder mehreren der Ansprüche 1 bis 26, **dadurch gekennzeichnet, daß** das Gurtmagazin (1) lösbar ausgebildet ist und zur Befestigung an der Spannratsche herstellungskonforme Verbindungselemente aufweist, vorzugsweise ein um (2b) verlängertes Bodenteil (2) mit einer Hakenlasche (31) sowie zwei Seitenlaschen (32, 32a) mit Halterungen (33, 33a) für Verbindungselemente.

29. Spannratsche mit Gurtmagazin nach Anspruch 28, **dadurch gekennzeichnet, daß** das Gurtmagazin (1) in einer Art Wechselmagazin an eine Spannratsche anbringbar und wieder entfembar ist.

30. Spannratsche mit Gurtmagazin nach einem oder mehreren der vorhergehenden Ansprüche, **gekennzeichnet durch** eine an mindestens einer Außenseite der Lastspannrolle (8) befestigte Drehspange (18) zum manuellen Vor- bzw. Rückdrehen der Lastspannrolle.

31. Spannratsche mit Gurtmagazin nach einem oder mehreren der vorhergehenden Ansprüche, **dadurch gekennzeichnet, daß** der Spannhebel (10) in geschlossener Position in den Aktionsradius der Drehkurbel (14) hineinragt derart, daß ein Rückdrehen der Gurtaufwickelwelle (15) verhindert wird.

32. Spannratsche mit Gurtmagazin nach einem oder mehreren der vorhergehenden Ansprüche, **gekennzeichnet durch** eine Aussparung (13) im Spannhebel (10) derart, daß bei geschlossenem Spannhebel die Drehkurbel (14) darin arretierbar ist.

33. Spannratsche mit Gurtmagazin nach einem oder mehreren der vorhergehenden Ansprüche, **dadurch gekennzeichnet, daß** die Drehkurbel (14) mit der Gurtaufwickelwelle (15) über eine Rutschkupplung, Federwerk oder dergleichen derart gekoppelt ist, daß die Drehkurbel (14) bei stramm aufgewickeltem Restgurt aus jeder Lage heraus zumindest bis in eine Arretierungsstellung wie z.B. der Aussparung (13) im Spannhebel weiter bewegt und dort gegen Rückdrehen arretiert werden kann.

34. Spannratsche mit Gurtmagazin nach einem oder mehreren der vorhergehenden Ansprüche, **dadurch gekennzeichnet, daß** die Drehkurbel (14) bzw. deren Handgriff umlegbar, versenkbar, oder abnehmbar ist.

35. Spannratsche mit Gurtmagazin nach Anspruch 34, **dadurch gekennzeichnet, daß** die Gurtaufwickelwelle (15) gegen Rückdrehen arretierbar ist.

36. Spannratsche mit Gurtmagazin nach einem oder mehreren der vorhergehenden Ansprüche, **dadurch gekennzeichnet, daß** die Gurtaufwickelwelle (15) bzw. der darauf aufgewickelte Gurt (19, 24) im Gurtmagazin (1) mit einer Drehbremswirkung beaufschlagt ist, z.B. mittels einer Federscheibe (16) die mit der Gurtaufwickelwelle (15) drehfest verbunden, druckbeaufschlagt auf dem Oberteil (2a) schleift.

37. Spannratsche mit Gurtmagazin nach einem oder mehreren der vorhergehenden Ansprüche, **dadurch gekennzeichnet, daß** das lose Gurtende des Gurtes (19, 24) auf der Gurtaufwickelwelle (15) im Gurtmagazin (1) befestigt ist.

38. Spannratsche mit Gurtmagazin nach einem der vorhergehenden Ansprüche, **dadurch gekennzeichnet, daß** auf dem Gurt (19) zwischen der Gurtaufwickelwelle (15) und der Lastspannrolle (8) in einem Abstand zu der Gurtaufwickelwelle (15) ein Gurtstopper (23) angebracht ist der einen Durchmesser hat der größer ist als der Schlitz in der Lastspannrolle (8).

39. Spannratsche mit Gurtmagazin nach einem der vorhergehenden Ansprüche, **gekennzeichnet durch** einen Abstand der Gurtführungen (17, 17a) zueinander, der größer dem Durchmesser des Gurtstoppers (23) ist.

40. Spannratsche mit Gurtmagazin nach einem oder mehreren der vorhergehenden Ansprüche, **dadurch gekennzeichnet, daß** der Sperrschieber (11) in geschlossener Position des Spannhebels (10) hinter den Arretierungsfahnen (35, 35a) in die Verzahnung der Sperrräder (9, 9a) eingreift und dabei die Flanken (12, 12a) den Sperrschieber (4) in seiner Eingriffstellung mit den Sperrräder (9, 9a), hintergreift.

41. Spannratsche mit Gurtmagazin nach einem oder mehreren der vorhergehenden Ansprüche, **dadurch gekennzeichnet, daß** die Spannratsche (30) verschiedenartige Gesperre bzw. branchenspezifische Anbauten aufweist, wie z.B. Gesperre mit schrittweiser Rückdrehung der Lastspannrolle, oder speziellen Befestigungteilen, oder eine Vorrichtung zur Anbringung eines internen oder externen Schlosses.

42. Gurtmagazin für eine Spannratsche enthaltend eine Gurtaufwickelwelle (15) für ein Gurtband, eine Halterung (31, 32) zur Befestigung des Gurtmagazins
(1) an einer Spannratsche (30) und eine Gurtumlenkung (17, 17a) um das von der Gurtauwickelrolle (15) abgezogene Gurtband um etwa 90° zu drehen.

## Claims

1. A tensioning ratchet (30) with belt magazine (1) for winding up a non-active stock of a tensioning belt (19) , in which the tensioning ratchet (30) contains a load tensioning roller (8) and an actuator for the latter, and the belt magazine (1) has a belt winding device (14, 15), **characterized in that** the belt winding device (14, 15) has a winding axis that runs essentially perpendicular to the axial direction of the load tensioning roller (8).

2. The tensioning ratchet with belt magazine according to claim 1, **characterized by** at least one belt guide (17, 17a) that transfers the belt (19) from one plane to one essentially perpendicular thereto.

3. The tensioning ratchet with belt magazine according to one of the preceding claims, **characterized in that** the belt-winding device contains a belt-winding shaft (15) on which the belt (19) can be wound.

4. The tensioning ratchet with belt magazine according to one of the preceding claims, **characterized in that** the belt-winding shaft (15) can be activated by a crank handle.

5. The tensioning ratchet with belt magazine according to one of the preceding claims, **characterized in that** the load-tensioning roller (8) is rotatably mounted between a lower arm (3, 3a) and a tension lever (10).

6. The tensioning ratchet with belt magazine according to claim 5, **characterized in that** locking wheels (9, 9a) positively connected with the load tensioning roller (8) are provided at least on one, preferably both, external sides of the lower arm (3, 3a) and the tension lever (10), wherein at least one stopper is provided in the lower arm (3, 3a) and/or in the tension lever (10), and can be made to interact with the locking wheels (9, 9a) in such a way that one stopper (4, 11) serves to advance the load tensioning roller, and hence wind or tension the belt while opening and closing the tension lever, while the other one prevents the load tensioning roller from turning back.

7. The tensioning ratchet with belt magazine according to one of the preceding claims, **characterized in that** the belt machine (1) lies flat relative to the tensioning ratchet (30) (i.e., twisted from vertical to horizontal), wherein the belt can be rolled horizontally on a belt winding shaft (15) situated vertically in the belt magazine.

8. The tensioning ratchet with belt magazine according to claim 6, **characterized in that** the at least one stopper (4, 11) can be moved in guide slits provided in the lateral walls of the lower arm (3, 3a) and tension lever (10).

9. The tensioning ratchet with belt magazine according to claim 8, **characterized in that** the at least one stopper (4, 11) is resiliently pressed against the at least one locking wheel (9, 9a).

10. The tensioning ratchet with belt magazine according to one of the preceding claims, **characterized in that** the belt winding shaft (15) is rotatably mounted in the middle of the belt magazine (1) in casing parts (2, 2a) and provided with a crank (14) handle.

11. The tensioning ratchet with belt magazine according to one of the preceding claims, **characterized in that** the belt-winding shaft (15) is rotated by a spring-actuated drive means.

12. The tensioning ratchet with belt magazine according to one or more of the preceding claims, **characterized in that** the belt winding shaft (15) has attachment means, e.g., boreholes (22), or a through slit for securing the belt (19) and (24), respectively.

13. The tensioning ratchet with belt magazine according to one or more of the preceding claims, **characterized by** two belt guides (17, 17a) spaced apart from each other.

14. The tensioning ratchet with belt magazine according to one or more of claims 2 to 13, **characterized in that** the belt guides (17, 17a), for example, consist of the lateral parts (3, 3a) of the lower arm, or of the lateral brackets (5, 5a) of the casing parts (2, 2a), or of two bolts connecting the casing parts (2, 2a) in a dimensionally stable manner.

15. The tensioning ratchet with belt magazine according to one or more of the preceding claims, **characterized in that** the belt guides (17, 17a) have rotatably mounted sleeves, sliding rollers or the like.

16. The tensioning ratchet with belt magazine according to one or more of the preceding claims, **characterized in that** the belt (19, 24) is rotated by 90° between the belt guides (17, 17a) and the load-tensioning roller (8).

17. The tensioning ratchet with belt magazine according to one or more of the preceding claims, **characterized in that** the stopper (4) is situated at a radial angle to the load tensioning roller (8), which corresponds to or exceeds the angle of the rotated belt progression between the load tensioning roller (8) and the belt guides (17, 17a).

18. The tensioning ratchet with belt magazine according to one or more of the preceding claims, **characterized in that** the stopper (4) is spring-loaded on its lower side facing the floor part (2) in the direction toward the locking wheel (9, 9a).

19. The tensioning ratchet with belt magazine according to claim 18, **characterized in that** the spring-loading takes place with a annular spring mounted in the lateral part (3) and (3a), respectively.

20. The tensioning ratchet with belt magazine according to one or more of the preceding claims, **characterized in that** the stoppers (4, 11) engage the locking wheels (9, 9a) in a radial and shape-conforming manner.

21. The tensioning ratchet with belt magazine according to one or more of the preceding claims, **characterized in that** the second belt (27) is secured to the transverse (25), and the other end of the belt has a connection means, e.g., a hook.

22. The tensioning ratchet with belt magazine according to one or more of the preceding claims, **characterized in that** an attachment part (28) with a locking mechanism (26) is secured to the transverse (25) for attaching a second belt (27).

23. The tensioning ratchet with belt magazine according to one or more of the preceding claims, **characterized by** a strap (7) pivoted in the lateral walls (3, 3a) for attaching a second belt (27).

24. The tensioning ratchet with belt magazine according to claim 23, **characterized in that** the strap (7) extends out beyond the traverse (25).

25. The tensioning ratchet with belt magazine according to one or more of the preceding claims, **characterized in that** the strap (7) is essentially U-shaped, and has bends (7a, 7b).

26. The tensioning ratchet with belt magazine according to one or more of the preceding claims, **characterized in that** the strap (7) has securing means (29, 29a) at its two ends extending through the lateral walls (3, 3a) into the inside of the lower arm to prevent sliding out.

27. The tensioning ratchet with belt magazine according to one or more of the preceding claims, **characterized in that** the lower arm of the tensioning ratchet (30) is designed as a single piece with the belt magazine (1).

28. The tensioning ratchet with belt magazine according to one or more of claims 1 to 26, **characterized in that** the belt magazine (1) is detachable, and has production-conformant connecting elements for attachment to the tensioning ratchet, preferably a floor part (2) extended by (2b) with a hook connector (31) and two side brackets (32, 32a) provided with mounts (33, 33a) for connecting elements.

29. The tensioning ratchet with belt magazine according to claim 28, **characterized in that** the belt magazine (1) can be secured to and again removed from a tensioning ratchet as a kind of replacement magazine.

30. The tensioning ratchet with belt magazine according to one or more of the preceding claims, **characterized by** a rotating clasp (18) secured to at least one external side of the load tensioning roller (8) for manually advancing or returning the load tensioning roller.

31. The tensioning ratchet with belt magazine according to one or more of the preceding claims, **characterized in that** the tension lever (10) extends into the active radius of the crank handle (14) in a closed position in such a way as to prevent the belt winding shaft (15) from turning back.

32. The tensioning ratchet with belt magazine according to one or more of the preceding claims, **characterized by** a recess (13) in the tension lever (10) that makes it possible to lock the crank handle (14) therein with the tension lever closed.

33. The tensioning ratchet with belt magazine according to one or more of the preceding claims, **characterized in that** the crank handle (14) is coupled with the belt winding shaft (15) via a sliding clutch, spring mechanism or the like in such a way that the crank handle (14) can be moved further out of any position at least to a locking position with the residual belt wound tight, e.g., the recess (13) in the tension lever, and can be locked there against turning back.

34. The tensioning ratchet with belt magazine according to one or more of the preceding claims, **characterized in that** the crank handle (14) and its grip, respectively, is foldable, retractable or detachable.

35. The tensioning ratchet with belt magazine according to claim 34, **characterized in that** the belt-winding shaft (15) can be locked against turning back.

36. The tensioning ratchet with belt magazine according to one or more of the preceding claims, **characterized in that** the belt winding shaft (15) or the belt (19, 24) wound thereon is exposed to a rotating braking action in the belt magazine (1) , e.g., by means of a flat spring (16) that is connected with the belt winding shaft (15) so that it cannot rotate, and grinds against the upper part (2a) under a pressure.

37. The tensioning ratchet with belt magazine according to one or more of the preceding claims, **characterized in that** the loose belt end of the belt (19, 24) is secured to the belt-winding shaft (15) in the belt magazine (1).

38. The tensioning ratchet with belt magazine according to one or more of the preceding claims, **characterized in that** a belt stopper (23) is secured on the belt (19) between the belt-winding shaft (15) and the load tensioning roller (8) spaced apart from the belt winding shaft (15), whose diameter is greater than the slit in the load tensioning roller (8) .

39. The tensioning ratchet with belt magazine according to one or more of the preceding claims, **characterized by** a distance between the belt guides (17, 17a) that exceeds the diameter of the belt stopper (23).

40. The tensioning ratchet with belt magazine according to one or more of the preceding claims, **characterized in that** the stopper (11) engages behind the locking lugs (35, 35a) into the toothing of the locked wheels (9, 9a) with the tension lever (10) closed, and grips the flanks (12, 12a) of the stopper (4) from behind while it is engaged with the locking wheels (9, 9a).

41. The tensioning ratchet with belt magazine according to one or more of the preceding claims, **characterized in that** the tensioning ratchet (30) has various types of locking mechanisms and branch-specific add-ons, respectively, e.g., locking mechanisms with incremental return of the load tensioning roller, or special attachment parts, or a device for securing an internal or external lock.

42. A belt magazine for a tensioning ratchet consisting of a belt winding shaft (15) for a belt band, a mount (31, 32) for securing the belt magazine (1) to a tensioning ratchet (30) and a belt guide (17, 17a) to turn the belt band removed from the belt winding roller (15) by about 90°.

## Revendications

1. Cliquet-tendeur (30) avec chargeur de sangle (1) permettant le renvidage d'une sangle d'arrimage (19) non-active, le cliquet-tendeur (30) présentant un galet-tendeur (8) ainsi qu'un dispositif d' actionnement dudit galet et le chargeur de sangle (1) étant doté d'un dispositif de renvidage (14, 15) de la sangle, **caractérisé en ce que** le dispositif de renvidage (14, 15) de la sangle comprend un axe d'enroulement se développant principalement perpendiculaire par rapport au sens de l'axe du galet-tendeur (8).

2. Cliquet-tendeur avec chargeur de sangle selon la revendication 1, **caractérisé en ce que** le cliquet comprend au moins un guide de sangle (17, 17a) permettant de guider la sangle (19) depuis un plan donné jusqu'à un plan principalement perpendiculaire au premier.

3. Cliquet-tendeur avec chargeur de sangle selon l'une des revendications précédentes, **caractérisé en ce que** le dispositif de renvidage de la sangle comprend un arbre de renvidage (15) sur lequel la sangle (19) peut venir s'enrouler.

4. Cliquet-tendeur avec chargeur de sangle selon l'une des revendications précédentes, **caractérisé en ce que** l'arbre de renvidage (15) peut être actionné au moyen d'une manivelle à main.

5. Cliquet-tendeur avec chargeur de sangle selon l'une des revendications précédentes, **caractérisé en ce que** le galet-tendeur (8) se trouve positionné de manière à pouvoir pivoter entre un bras inférieur (3, 3a) et un levier de serrage (10).

6. Cliquet-tendeur avec chargeur de sangle selon la revendication 5, **caractérisé en ce que** sont prévues au moins sur l'une des faces externes, et de préférence sur les deux faces externes, du bras inférieur (3, 3a) et du levier de serrage (10) des roues d'encliquetage (9, 9a) formant une cohésion parfaite et étroite avec le galet-tendeur (8), au moins un registre d'arrêt étant prévu au niveau du bras inférieur (3, 3a) et/ou au niveau du levier de serrage (10), ledit registre pouvant être relié à et agir conjointement avec les roues d'encliquetage (9, 9a) de sorte qu'un registre d'arrêt (4, 11) puisse servir, lors du mouvement de levage et d'abaissement du levier de serrage, à faire avancer le galet-tendeur et, par conséquent, à l'enroulement et le cas échéant à la tension de la sangle, l'autre registre d'arrêt empêchant toute rotation inverse du galet-tendeur.

7. Cliquet-tendeur avec chargeur de sangle selon l'une des revendications précédentes, **caractérisé en ce que** le chargeur de sangle (1) est positionné de manière plane par rapport au cliquet-tendeur (30) (une rotation, en d'autres termes, lui étant imprimée pour passer de la position verticale à la position horizontale) faisant que la sangle en rotation horizontale peut venir s'enrouler sur un arbre de renvidage (15) placé, quant à lui, à la verticale dans le chargeur.

8. Cliquet-tendeur avec chargeur de sangle selon la revendication 6, **caractérisé en ce que** l'un au moins des registres d'arrêt (4, 11) est mobile et peut glisser dans des fentes de guidage prévues au niveau des parois latérales du bras inférieur (3, 3a) et du levier de serrage (10).

9. Cliquet-tendeur avec chargeur de sangle selon la revendication 8, **caractérisé en ce que** l'un au moins des registres d'arrêt (4, 11) se trouve comprimé de manière élastique contre l'une au moins des roues d'encliquetage (9, 9a).

10. Cliquet-tendeur avec chargeur de sangle selon l'une des revendications précédentes, **caractérisé en ce que** l'arbre de renvidage (15) est situé au centre même du chargeur (1) et positionné dans des éléments de boîtier (2, 2a) de sorte à pouvoir pivoter, ledit arbre étant muni d'une manivelle (14).

11. Cliquet-tendeur avec chargeur de sangle selon l'une des revendications précédentes, **caractérisé en ce que** l'arbre de renvidage (15) peut être amené à tourner grâce à un élément d'entraînement actionné par ressort.

12. Cliquet-tendeur avec chargeur de sangle selon une ou plusieurs des revendications précédentes, **caractérisé en ce que** l'arbre de renvidage (15) présente des dispositifs de fixation tel que, par exemple, des alésages (22) ou une fente de passage permettant de fixer la sangle (19) et respectivement la partie de sangle (24).

13. Cliquet-tendeur avec chargeur de sangle selon une ou plusieurs des revendications précédentes, **caractérisé par** deux guides de sangle (17, 17a) placés selon un écart donné l'un de l'autre.

14. Cliquet-tendeur avec chargeur de sangle selon une ou plusieurs des revendications 2 à 13, **caractérisé en ce que** les guides de sangle (17, 17a) se composent des parois latérales (3, 3a) du bras inférieur, ou des brides latérales (5, 5a) des éléments de boîtier (2, 2a), ou encore d'axes permettant de relier de manière indéformable les éléments de boîtier (2, 2a).

15. Cliquet-tendeur avec chargeur de sangle selon une ou plusieurs des revendications précédentes, **caractérisé en ce que** les guides de sangle (17, 17a) présentent des manchons, des roulettes de glissement ou tout autre élément de même type positionné de sorte à pouvoir pivoter.

16. Cliquet-tendeur avec chargeur de sangle selon une ou plusieurs des revendications précédentes, **caractérisé en ce que** la sangle (19, 24) pivote entre les guides de sangle (17, 17a) et le galet-tendeur (8) selon une rotation de 90 degrés.

17. Cliquet-tendeur avec chargeur de sangle selon une ou plusieurs des revendications précédentes, **caractérisé en ce que** le registre d'arrêt (4) se trouve positionné selon un angle radial par rapport au galet-tendeur (8), l'angle radial étant égal ou supérieur à l'angle du tracé de sangle pivoté entre le galet-tendeur (8) et les deux guides de sangle (17, 17a).

18. Cliquet-tendeur avec chargeur de sangle selon une ou plusieurs des revendications précédentes, **caractérisé en ce que** le registre d'arrêt (4), au niveau de sa face de dessous tournée vers la partie inférieure (2), se trouve activé par ressort et ce, en direction de la roue d'encliquetage (9, 9a).

19. Cliquet-tendeur avec chargeur de sangle selon la revendication 18, **caractérisé en ce que** l'activation par ressort s'effectue au moyen d'un ressort-bague situé dans la paroi latérale (3) et respectivement (3a).

20. Cliquet-tendeur avec chargeur de sangle selon une ou plusieurs des revendications précédentes, **caractérisé en ce que** les registres d'arrêt (4, 11) viennent s'engrener et faire prise de manière radiale, et en concordance de par leur assemblage, avec les roues d'encliquetage (9, 9a)

21. Cliquet-tendeur avec chargeur de sangle selon une ou plusieurs des revendications précédentes, **caractérisé en ce qu'**une seconde sangle (27) est fixée sur la traverse (25), l'autre extrémité de la sangle présentant un dispositif de fixation, par exemple un crochet.

22. Cliquet-tendeur avec chargeur de sangle selon une ou plusieurs des revendications précédentes, **caractérisé en ce qu'**un élément de fixation (28), doté d'un dispositif d'arrêt (26) et permettant la fixation d'une seconde sangle (27), est assemblé à la traverse (25).

23. Cliquet-tendeur avec chargeur de sangle selon une ou plusieurs des revendications précédentes, **caractérisé par** un étrier (7) positionné de manière à pouvoir pivoter dans les parois latérales (3, 3a) et permettant la fixation d'une seconde sangle (27).

24. Cliquet-tendeur avec chargeur de sangle selon la revendication 23, **caractérisé en ce que** l'étrier (7) fait saillie et dépasse de la traverse (25).

25. Cliquet-tendeur avec chargeur de sangle selon une ou plusieurs des revendications précédentes, **caractérisé en ce que** l'étrier (7) présente principalement une forme en U ainsi que des parties cintrées (7a, 7b).

26. Cliquet-tendeur avec chargeur de sangle selon une ou plusieurs des revendications précédentes, **caractérisé en ce que** l'étrier (7) présente, au niveau de ses deux extrémités dépassant des parois latérales (3, 3a) et faisant saillie à l'intérieur, du bras inférieur, des dispositifs d'arrêt et de fixation (29, 29a) permettant d'éviter que l'étrier ne glisse et ne se désengage du bras inférieur.

27. Cliquet-tendeur avec chargeur de sangle selon une ou plusieurs des revendications précédentes, **caractérisé en ce que** le bras inférieur du cliquet-tendeur (30) ne forme avec le chargeur de sangle (1) qu'une seule et même pièce.

28. Cliquet-tendeur avec chargeur de sangle selon une ou plusieurs des revendications 1 à 26, **caractérisé en ce que** le chargeur de sangle (1) est conçu pour être amovible et présente, afin de pouvoir être assemblé au cliquet-tendeur, des éléments de fixation de fabrication conforme, de préférence une partie inférieure (2) prolongée de la partie (2b) et équipée d'une bride à crochet (31) ainsi que deux brides latérales (32, 32a) pourvues d'alésages (33, 33a) destinées à des éléments de fixation.

29. Cliquet-tendeur avec chargeur de sangle selon la revendication 28, **caractérisé en ce que** le chargeur de sangle (1) peut être une sorte de chargeur permutable monté sur le cliquet-tendeur et pouvant en être retiré.

30. Cliquet-tendeur avec chargeur de sangle selon une ou plusieurs des revendications précédentes, **caractérisé par** une boucle de retrait (18) fixée sur au moins l'une des faces externes du galet-tendeur (8) et permettant d'opérer manuellement une rotation avant ou inverse dudit galet-tendeur.

31. Cliquet-tendeur avec chargeur de sangle selon une ou plusieurs des revendications précédentes, **caractérisé en ce que** le levier de serrage (10) en position de verrouillage vient faire saillie au niveau du rayon d'action de la manivelle (14) de sorte à interdire toute rotation inverse de l'arbre de renvidage (15).

32. Cliquet-tendeur avec chargeur de sangle selon une ou plusieurs des revendications précédentes, **caractérisé par** un évidement (13) pratiqué dans le levier de serrage (10) de sorte que la manivelle se trouve bloquée par ledit évidement lorsque le levier de serrage est en position verrouillée.

33. Cliquet-tendeur avec chargeur de sangle selon une ou plusieurs des revendications précédentes, **caractérisé en ce que** la manivelle (14) se trouve couplée à l'arbre de renvidage (15) au moyen d'un accouplement à friction, d'une transmission à ressort ou autre dispositif de même type, caractérisé également **en ce qu'**il est possible de continuer à actionner la manivelle (14) depuis n'importe quelle position, lorsque la sangle restante est tendue et rembobinée dans le chargeur, du moins jusqu'à ce que la manivelle atteigne une position de blocage telle que par exemple l'évidement (13) dans le levier de serrage et qu'elle y peut alors être bloquée contre toute rotation inverse.

34. Cliquet-tendeur avec chargeur de sangle selon une ou plusieurs des revendications précédentes, **caractérisé en ce que** la manivelle (14) ou sa poignée peuvent être rabattues, enfoncées ou retirées.

35. Cliquet-tendeur avec chargeur de sangle selon la revendication 34, **caractérisé en ce que** l'arbre de renvidage de la sangle (15) peut être bloqué afin d'empêcher toute rotation inverse.

36. Cliquet-tendeur avec chargeur de sangle selon une ou plusieurs des revendications précédentes, **caractérisé en ce que** peut être imprimé à l'arbre de renvidage (15) ou à la sangle (19, 24) renvidée sur celui-ci dans le chargeur (1), une action de freinage interdisant toute rotation, l'action de freinage s'effectuant par exemple au moyen d'une rondelle élastique bombée (16) reliée à l'arbre de renvidage (15) et présentant une bonne résistance à la torsion, la rondelle étant comprimée et venant frotter sur la partie supérieure (2a).

37. Cliquet-tendeur avec chargeur de sangle selon une ou plusieurs des revendications précédentes, **caractérisé en ce que** l'extrémité lâche de la sangle (19, 24) se trouve fixée à l'arbre de renvidage (15) situé à l'intérieur du chargeur (1).

38. Cliquet-tendeur avec chargeur de sangle selon l'une des revendications précédentes, **caractérisé en ce que**, entre arbre de renvidage (15) et galet-tendeur (8), est fixée à la sangle (19) une butée de sangle (23) selon un écartement donné par rapport audit arbre de renvidage (15), la butée de sangle ayant un diamètre plus important que n'est la fente de passage dans le galet-tendeur (8).

39. Cliquet-tendeur avec chargeur de sangle selon l'une des revendications précédentes, **caractérisé par** un écartement donné des guides de sangle (17, 17a) l'un par rapport à l'autre, ledit écartement étant plus important que le diamètre de la butée de sangle (23).

40. Cliquet-tendeur avec chargeur de sangle selon une ou plusieurs des revendications précédentes, **caractérisé en ce que** le registre d'arrêt (11) vient s'engrener, en position de verrouillage du levier de serrage (10), à l'arrière des talons d'arrêt (35, 35a), dans les dentures des roues d'encliquetage (9, 9a), les parois latérales (12, 12a) du levier de serrage venant faire prise sur le registre d'arrêt (4) du bras inférieur lorsque ledit registre se trouve en position d'engrènement avec les roues d'encliquetage (9, 9a).

41. Cliquet-tendeur avec chargeur de sangle selon une ou plusieurs des revendications précédentes, **caractérisé en ce que** le cliquet-tendeur (30) présente des dispositifs d'encliquetage de types différents ainsi que des éléments spécifiques à une utilisation industrielle donnée tel que par exemple des dispositifs d'encliquetage permettant une rotation inverse progressive du galet-tendeur ou des éléments de fixation spécifiques ou bien encore un dispositif permettant la pose d'une serrure interne ou externe.

42. Chargeur de sangle pour cliquet-tendeur comprenant un arbre de renvidage (15) pour sangle, un support (31, 32) pour maintenir le chargeur de sangle (1) en place sur un cliquet-tendeur (30) ainsi qu'un dispositif de renvoi de la sangle (17, 17a) permettant de faire pivoter la sangle provenant de l'arbre de renvidage (15) selon une rotation à 90 degrés.
